# EUROPÄISCHE PATENTSCHRIFT

(11) **EP 1 182 099 B1**
(45) Veröffentlichungstag und Bekanntmachung des Hinweises auf die Patenterteilung: **23.06.2004**
(21) Anmeldenummer: 01118785.3
(22) Anmeldetag: 09.08.2001
(51) Int. Cl.: B60R 21/16

(54) **Fahrzeuginsassen-Schutzvorrichtung mit Seitengassack**
Vehicle passengers protection system with side air-bag
Système de protection pour passagers de véhicule avec air-bag latéral

(30) Priorität: 25.08.2000 DE 20014706 U
(43) Veröffentlichungstag der Anmeldung: 27.02.2002
(73) Patentinhaber: TRW Automotive GmbH, 73553 Alfdorf (DE)
(72) Erfinder: Fischer, Anton, 73579 Leinweiler (DE); Rothweiler, Steffen, 73553 Alfdorf (DE)
(74) Vertreter: Kitzhofer, Thomas, Dipl.-Ing.

(56) Entgegenhaltungen:
- DE-A- 10 004 210
- DE-A- 19 704 051
- DE-U- 29 705 489
- DE-U- 29 718 305
- DE-U- 29 907 622

## Beschreibung

Die Erfindung betrifft eine Fahrzeuginsassen-Schutzvorrichtung mit einem Seitengassack, der sich im aufgeblasenen Zustand von einer vorderen Seitenscheibe bis zu einer hinteren Seitenscheibe eines Fahrzeugs erstreckt, um einen Seitenaufprallschutz für einen Front- und einen Heckinsassen zu schaffen, und dessen Kammern durch nicht aufblasbare Bereiche miteinander verbunden sind.

Derartige Schutzvorrichtungen werden eingesetzt, um Fahrzeuginsassen bei einem Seitenaufprall oder einem Überschlag des Fahrzeugs vor Verletzungen zu schützen. Dabei ist wesentlich, daß der Seitengassack eine genügend hohe Stabilität aufweist, um den Fahrzeuginsassen im Fahrzeug zurückzuhalten, auch wenn beispielsweise die Seitenscheiben zerstört sind und das Fahrzeug sich überschlägt.

DE 297 05 489 U offenbart eine Schutzvorrichtung gemäß dem Oberbegriff des Anspruchs 1.

Bei bisherigen seitengassäcken, wie in DE 299 07 622 U, wird eine derartige Stabilität dadurch erreicht, daß Abspannpunkte für den Gassack an der A- und an der C-Säule des Fahrzeugs vorgesehen sind. Es ist weiterhin bekannt, den Gassack aus einem durchgängigen Gewebestück zu fertigen, das den Bereich der Seitenscheiben nahezu vollständig abdeckt, wobei in dem Gewebestück einzelne aufblasbare Kammern ausgebildet sind.

Nachteilig bei einer solchen Schutzvorrichtung ist, daß zur Montage des Gassackmoduls die A- und C-Säule des Fahrzeugs mit einbezogen werden müssen, was den Aufwand erhöht und zusätzliche Kosten verursacht.

Aufgabe der Erfindung ist es, eine einfache und kostengünstig zu montierende Schutzvorrichtung zu schaffen.

Erfindungsgemäß wird eine Schutzvorrichtung gemäß Anspruch 1 vorgeschlagen. Die Stützkammer bewirkt zum einen eine Abstützung des gesamten Gassacks an der B-Säule des Fahrzeugs und erzeugt zum anderen eine Abspannung zwischen der Stützkammer und den Befestigungspunkten des Gassacks am Dachrahmen, was dem Gassack eine genügend hohe Stabilität verleiht.

Vorzugsweise erstreckt sich der Gassack von der A-Säule bis zur C-Säule des Fahrzeugs. Die Abspannung durch die Stützkammer ist ausreichend, um einen genauso großen Schutzbereich abzudecken wie bei bekannten Gassäcken.

Bevorzugt ist die Stützkammer zwischen zwei Kammern des Gassacks angeordnet. Rechts und links der Stützkammer erstrecken sich also zwei Kammern, die in sich ebenfalls noch strukturiert sein können, die das eigentliche Rückhalten der Fahrzeuginsassen bewerkstelligen. Es ist auch denkbar, eine höhere Anzahl von Kammern vorzusehen.

In einer bevorzugten Ausführungsform der Erfindung weist die Stützkammer im aufgeblasenen Zustand einen höheren Innendruck auf als die übrigen Kammern. Durch den erhöhten Innendruck erhöht sich die Abspannwirkung. Da die Stützkammer nicht zum Zurückhalten eines Fahrzeuginsassen eingesetzt werden muß, braucht der Innendruck nicht an eine optimale Rückhaltewirkung angepaßt zu sein. Die Wirkung der Stützkammer läßt sich auch dadurch unterstützen, daß die Wandung der Stützkammer eine größere Gasdichtigkeit aufweist als die Wandung der übrigen Kammern. Dies sorgt dafür, daß die Abspannwirkung des Gassacks auch noch über einen Zeitraum hinaus aufrechterhalten wird, zu dem der Innendruck in den Rückhaltekammern bereits abgefallen ist. Auf diese Weise kann die Rückhaltewirkung für eventuelle Folgeunfälle erhöht werden.

Vorzugsweise ist für die Schutzvorrichtung ein Gasgenerator vorgesehen, der im Bereich des Fahrzeugdachs oberhalb der Stützkammer angeordnet ist. Dies führt zu einer mittigen Anordnung des Gasgenerators zwischen den beiden Rückhaltekammern. Eine derartige Anordnung des Gasgenerators unterstützt das Entfaltungsverhalten des Gassacks, da der kinetische Impuls des Gasmassenstroms den Gassack in die gewünschte Position entfaltet. Außerdem entfällt die Notwendigkeit, den Gasgenerator im Bereich der A- oder der C-Säule anzuordnen.

Vorteilhafterweise ist ein Gasverteiler vorgesehen, der mit dem Gasgenerator in Verbindung steht und über den Gas in die einzelnen Kammern des Gassacks geleitet wird. Der Gasverteiler ist bevorzugt nach bekannter Technik so ausgelegt, daß im aufgeblasenen Zustand des Seitengassacks unterschiedliche Drücke in den einzelnen Kammern herrschen. Auf diese Weise läßt sich ein höherer Druck der Stützkammer verglichen mit den Rückhaltekammern erreichen. Ein solcher Gasverteiler sorgt außerdem dafür, daß alle Kammern des Gassacks gleichzeitig befüllt werden, so daß die Rückhaltewirkung für den Front- und den Heckinsassen gleichzeitig zur Verfügung steht und sich der Gassack gleichmäßig entfaltet.

In einer bevorzugten Ausführungsform der Erfindung erstreckt sich ein Längsende des zusammengelegten Gassacks entlang des front- oder heckseitigen Randes des Dachhimmels, so daß auch der Teil des Gassacks, der über die Erstreckung des Dachrahmens oberhalb der Seitenfenster hinausragt, nicht im Bereich der A- oder der C-Säule untergebracht sein muß. Bevorzugt ist dieser Teil des Seitengassacks im zusammengelegten Zustand in einer Röhre angeordnet, die sich im Bereich des Fahrzeugdaches vorzugsweise in Richtung der Fahrzeugmitte erstreckt. In dieser Röhre ist der Gassack vor Umwelteinflüssen und Beschädigung geschützt. Während des Entfaltens wird er durch die Entfaltungsbewegung aus der Röhre herausgezogen.

Weitere Merkmale und Vorteile der Erfindung ergeben sich aus der nachfolgenden Beschreibung eines Ausführungsbeispiels sowie den beigefügten Zeichnungen. In diesen zeigen:
- Figur 1 eine schematische perspektivische Ansicht eines Fahrzeugs mit einer erfindungsgemäßen Fahrzeuginsassen-Schutzvorrichtung mit zusammengelegtem Gassack;
- Figur 2 das Fahrzeug mit der Vorrichtung aus Figur 1 mit entfaltetem Gassack;
- Figur 3 einen Gasgenerator mit einem Gasverteiler einer erfindungsgemäßen Schutzvorrichtung; und
- Figur 4 das Entfaltungsverhalten eines Gassacks einer erfindungsgemäßen Schutzvorrichtung.

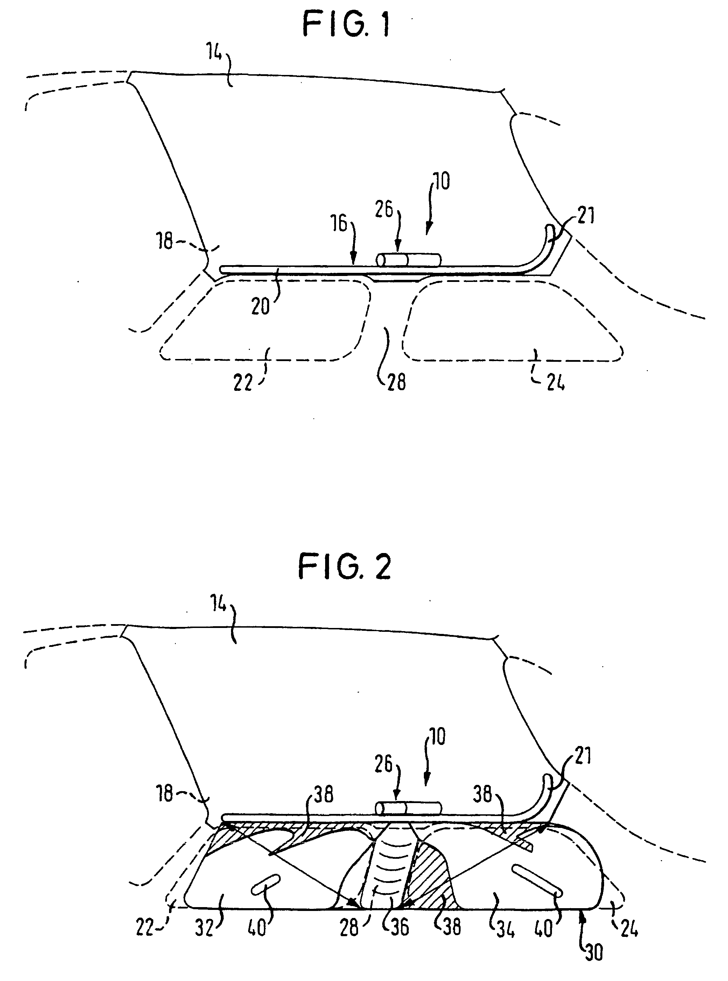

In Figur 1 ist eine erfindungsgemäße Fahrzeuginsassen-Schutzvorrichtung im zusammengelegten Zustand des Gassacks gezeigt. Die Schutzvorrichtung 10 weist einen Gassack 30 auf, der im Bereich des Fahrzeugdaches 14 an einem Dachrahmen 16 oder an einem Fahrzeughimmel 18 befestigt ist. Der Gassack ist zumindest an seinem frontseitigen und seinem heckseitigen oberen Ende befestigt (nicht dargestellt). Der Gassack kann in ein Gehäuse 20 oder eine Schutzfolie verpackt sein. Mittig zwischen den beiden Seitenscheiben 22 und 24 oberhalb der B-Säule 28 des Fahrzeugs ist ein Gasgenerator 26 angeordnet, der ebenfalls am Dachrahmen 16 oder am Fahrzeughimmel 18 befestigt ist.

Bei zusammengelegtem Gassack erstreckt sich die Schutzvorrichtung nur im Bereich des Fahrzeugdaches, nicht im Bereich der A- oder der C-Säule des Fahrzeugs.

Das Gehäuse 20 weist im heckseitigen Bereich des Fahrzeugs eine Röhre 21 auf, in der ein längsseitiges Ende des Gassacks verstaut ist. Die Röhre 21 verläuft im Bereich des Fahrzeugdaches am front- oder heckseitigen Rand zur Fahrzeugmitte und ist entweder am Dachrahmen oder am Dachhimmel 18 befestigt.

Figur 2 zeigt die Schutzvorrichtung 10 mit entfaltetem Gassack. Der Gassack 30 weist eine vordere und eine hintere Rückhaltekammer 32, 34 auf sowie eine zwischen den Rückhaltekammern angeordnete Stützkammer 36. Die einzelnen Kammern 32, 34, 36 sind durch nicht aufblasbare Gewebebereiche 38 miteinander verbunden. Die Kammern 32, 34, 36 bilden zusammen mit den Gewebebereichen 38 eine durchgängige Fläche. An den Gewebebereichen 38 sind auch Befestigungen ausgebildet (nicht dargestellt), mit denen der Gassack 30 im Bereich des Fahrzeugdaches 14 befestigt ist.

Die Rückhaltekammern 32, 34 weisen außerdem Abnäher 40, die nicht aufblasbare Bereiche definieren, auf, die zur Optimierung der Rückhaltekraft der Kammern 32, 34 dienen.

Der Gasgenerator 26 ist mit einem Gasverteiler 42 verbunden, über den das im Rückhaltefall vom Gasgenerator 26 erzeugte Gas in die einzelnen Kammern 32, 34, 36 geleitet wird. Die Kammern 32, 34, 36 weisen dazu Öffnungen im Bereich des Gasverteilers 42 auf. Der Gasverteiler 42 weist eine Hauptkammer 44 auf, von der sich drei Röhren 46, 48, 50 erstrecken, die in die einzelnen Kammern 32, 36, 34 münden. Die Öffnungen der einzelnen Kammern 32, 34, 36 sind z.B. mit Schlauchschellen 52 an den Rohren 46, 48, 50 befestigt. Die einzelnen Rohre 46, 48, 50 können z.B. einen unterschiedlichen Durchmesser aufweisen, um über unterschiedliche Gasflußraten einen unterschiedlichen Innendruck in den einzelnen Kammern 32, 34, 36 zu erzielen.

Durch die sich senkrecht entlang der B-Säule 28 über die gesamte vertikale Ausdehnung des Gassacks 30 erstreckenden Stützkammer 36 wird ein Kräftedreieck zwischen dem unteren Rand der Stützkammenr 36 und den äußeren Befestigungspunkten des Gassacks 30 am Dachrahmen 16 aufgespannt. Dieses Kräftedreieck ist durch Pfeile in Figur 2 symbolisiert. Die auf diese Weise entstehenden Abspannung zusammen mit der Abstützung der Stützkammer 36 an der B-Säule 28 stabilisiert den Gassack 30.

Die Stützkammer 36 weist eine besonders gasdichte Wandung auf, so daß sie noch einen hohen Innendruck aufweist, wenn der Innendruck der Kammern 32 und 34 bereits abgefallen ist. Auch zu diesem Zeitpunkt besteht durch das beschriebene Kräftedreieck noch eine Rückhaltewirkung für die Fahrzeuginsassen.

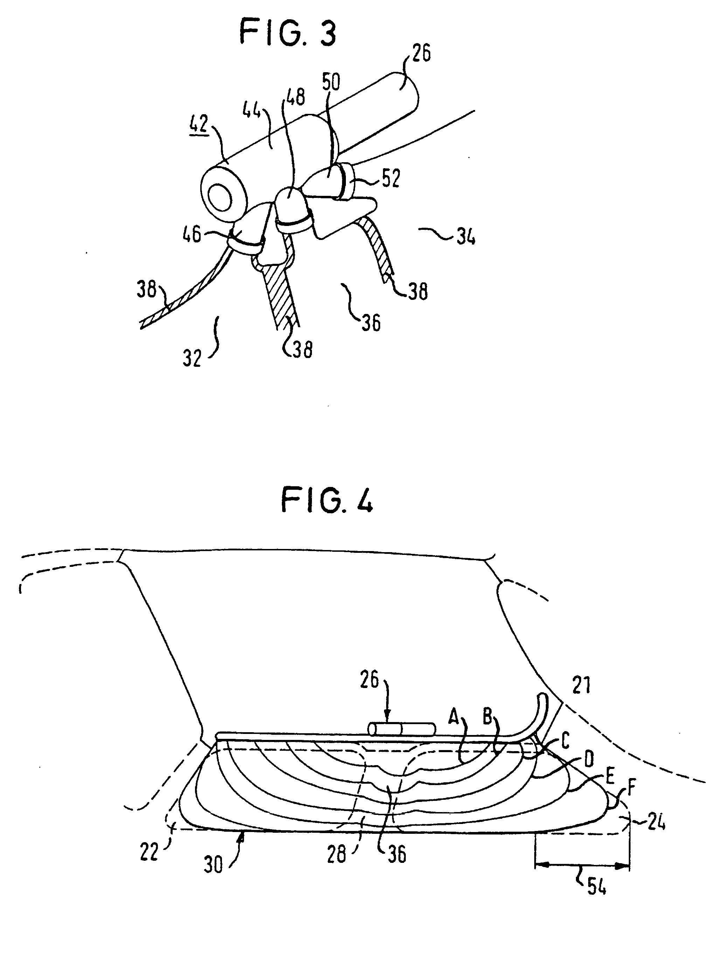

Das Entfaltungsverhalten des Gassackes 30 ist in Figur 4 schematisch dargestellt. Die durchgezogenen Linien A bis F verdeutlichen unterschiedliche Entfaltungsstadien, wobei A den frühesten Zeitpunkt darstellt und F den Umriß des komplett entfalteten Gassacks 30 zeigt. Die Stützkammer 36 entfaltet sich durch den hohen Gasstrom und den direkt nach unten gerichteten Gasstrom aus dem parallel zur B-Säule 38 verlaufenden Rohr 48 des Gasverteilers 42 direkt nach unten. Die Rückhaltekammern 32 und 34 werden durch den schräg frontseitig bzw. schräg heckseitig gerichteten Gasstrom aus den Rohren 46 und 50 entfaltet und dabei aus dem Gehäuse herausgezogen. Das in der Röhre 21 verstaut gewesene Längsende 54 des Gassacks wird aus der Röhre 21 herausgezogen und entfaltet sich ebenfalls.

Durch die Verwendung der Röhre 21 muß sich der Dachhimmel 18 nur im oberhalb der Seitenscheiben 22, 24 gelegenen Bereich öffnen, um den Gassack austreten zu lassen. Das Längsende 54 des Gassacks 30 kann sich dann durch die bereits geschaffene Öffnung im Dachhimmel 18 entfalten.

## Patentansprüche

1. Fahrzeuginsassen-Schutzvorrichtung mit einem Seitengassack (30), der sich im aufgeblasenen Zustand von einer vorderen Seitenscheibe (22) bis zu einer hinteren Seitenscheibe (24) eines Fahrzeugs erstreckt, um einen Seitenaufprallschutz für einen Front- und einen Heckinsassen zu schaffen, und dessen Kammern (32, 34, 36) durch nicht aufblasbare Bereiche (38) miteinander verbunden sind, wobei der Seitengassack (30) nur im Bereich eines Fahrzeugdaches (14) befestigt ist und **dadurch gekennzeichnet, daß** eine Stützkammer (36) vorgesehen ist, die sich im aufgeblasenen Zustand entlang einer B-Säule (28) des Fahrzeugs erstreckt.

2. Fahrzeuginsassen-Schutzvorrichtung nach Anspruch 1, **dadurch gekennzeichnet, daß** sich der Gassack (30) von der A-Säule bis zur C-Säule erstreckt.

3. Fahrzeuginsassen-Schutzvorrichtung nach Anspruch 1, **dadurch gekennzeichnet, daß** die Stützkammer (36) zwischen zwei Kammern (32, 34) des Gassacks (30) angeordnet ist.

4. Fahrzeuginsassen-Schutzvorrichtung nach einem der vorhergehenden Ansprüche, **dadurch gekennzeichnet, daß** die Stützkammer (36) im aufgeblasenen Zustand einen höheren Innendruck aufweist als die übrigen Kammern (32, 34).

5. Fahrzeuginsassen-Schutzvorrichtung nach einem der vorhergehenden Ansprüche, **dadurch gekennzeichnet, daß** die Wandung der Stützkammer (36) eine größere Gasdichtigkeit aufweist als die Wandung der übrigen Kammern (32, 34).

6. Fahrzeuginsassen-Schutzvorrichtung nach einem der vorhergehenden Ansprüche, **dadurch gekennzeichnet, daß** ein Gasgenerator (26) vorgesehen ist und daß der Gasgenerator (26) im Bereich des Fahrzeugdachs (14) oberhalb der Stützkammer (36) angeordnet ist.

7. Fahrzeuginsassen-Schutzvorrichtung nach Anspruch 6, **dadurch gekennzeichnet, daß** ein Gasverteiler (42) vorgesehen ist, der mit dem Gasgenerator (26) in Verbindung steht und über den Gas in die einzelnen Kammern (32, 34, 36) geleitet wird.

8. Fahrzeuginsassen-Schutzvorrichtung nach Anspruch 7, **dadurch gekennzeichnet, daß** der Gasverteiler (42) so ausgelegt ist, daß im aufgeblasenen Zustand des Seitengassacks (30) unterschiedliche Drücke in den einzelnen Kammern (32, 34, 36) herrschen.

9. Fahrzeuginsassen-Schutzvorrichtung nach einem der vorhergehenden Ansprüche, **dadurch gekennzeichnet, daß** ein Teil (54) des Seitengassacks (30) im zusammengelegten Zustand in einer Röhre (21) angeordnet ist, die sich im Bereich des Fahrzeugdaches (14) erstreckt.

10. Fahrzeuginsassen-Schutzvorrichtung nach einem der vorhergehenden Ansprüche, **dadurch gekennzeichnet, daß** sich ein Längsende (54) des zusammengelegten Gassacks (30) entlang des front- oder heckseitigen Randes des Dachhimmels (18) erstreckt.

## Claims

1. A vehicle occupant protective device, comprising a side gas bag (30), which in the inflated state extends from a front side window (22) to a rear side window (24) of a vehicle in order to provide a side impact protection for a front and a rear occupant, and the chambers (32, 34, 36) of which are connected with each other by non-inflatable regions (38), the side gas bag (30) being fastened only in the region of a vehicle roof (14), and **characterized in that** a support chamber (36) is provided which in the inflated state extends along a B-column (28) of the vehicle.

2. The vehicle occupant protective device according to claim 1, **characterized in that** the gas bag (30) extends from the A-column to the C-column.

3. The vehicle occupant protective device according to claim 1, **characterized in that** the support chamber (36) is arranged between two chambers (32, 34) of the gas bag (30).

4. The vehicle occupant protective device according to any of the preceding claims, **characterized in that** the support chamber (36) in the inflated state has a higher internal pressure than the remaining chambers (32, 34).

5. The vehicle occupant protective device according to any of the preceding claims, **characterized in that** the wall of the support chamber (36) has a greater gas-tightness than the wall of the remaining chambers (32, 34).

6. The vehicle occupant protective device according to any of the preceding claims, **characterized in that** a gas generator (26) is provided and that the gas generator (26) is arranged in the region of the vehicle roof (14) above the support chamber (36).

7. The vehicle occupant protective device according to claim 6, **characterized in that** a gas distributor (42) is provided, which communicates with the gas generator (26) and via which gas is directed into the individual chambers (32, 34, 36).

8. The vehicle occupant protective device according to claim 7, **characterized in that** the gas distributor (42) is designed such that in the inflated state of the side gas bag (30) different pressures prevail in the individual chambers (32, 34, 36).

9. The vehicle occupant protective device according to any of the preceding claims, **characterized in that** a part (54) of the side gas bag (30) is arranged in the folded state in a tube (21), which extends in the region of the vehicle roof (14).

10. The vehicle occupant protective device according to any of the preceding claims, **characterized in that** a longitudinal end (54) of the folded gas bag (30) extends along the edge of the roof lining (18) on the front or rear side.

## Revendications

1. Dispositif de protection des occupants d'un véhicule, comportant un coussin à gaz latéral (30) qui s'étend, à l'état gonflé, depuis une vitre latérale (22) avant jusqu'à une vitre latérale (24) arrière d'un véhicule pour créer une protection d'impact latéral pour un passager avant et pour un passager arrière, et dont les chambres (32, 34, 36) sont reliées les unes aux autres par des régions (38) non gonflables, le coussin à gaz latéral (30) n'étant fixé que dans la région d'un toit de véhicule (14) et **caractérisé en ce qu'**il est prévu une chambre de soutien (36) qui s'étend, à l'état gonflé, le long d'une colonne B (28) du véhicule.

2. Dispositif de protection des occupants d'un véhicule selon la revendication 1, **caractérisé en ce que** le coussin à gaz (30) s'étend depuis la colonne A jusqu'à la colonne C.

3. Dispositif de protection des occupants d'un véhicule selon la revendication 1, **caractérisé en ce que** la chambre de soutien (36) est agencée entre deux chambres (32, 34) du coussin à gaz (30).

4. Dispositif de protection des occupants d'un véhicule selon l'une des revendications précédentes, **caractérisé en ce que** la chambre de soutien (36) présente, à l'état gonflé, une pression intérieure plus élevée que les autres chambres (32, 34).

5. Dispositif de protection des occupants d'un véhicule selon l'une des revendications précédentes, **caractérisé en ce que** la paroi de la chambre de soutien (36) présente une plus grande étanchéité au gaz que la paroi des autres chambres (32, 34).

6. Dispositif de protection des occupants d'un véhicule selon l'une des revendications précédentes, **caractérisé en ce qu'**il est prévu un générateur de gaz (26) et **en ce que** le générateur de gaz (26) est agencé dans la région du toit de véhicule (14) au-dessus de la chambre de soutien (36).

7. Dispositif de protection des occupants d'un véhicule selon la revendication 6, **caractérisé en ce qu'**il est prévu un distributeur de gaz (42) qui communique avec le générateur de gaz (26) et via lequel du gaz est introduit dans les chambres individuelles (32, 34, 36).

8. Dispositif de protection des occupants d'un véhicule selon la revendication 7, **caractérisé en ce que** le distributeur de gaz (42) est conçu de telle sorte qu'à l'état gonflé du coussin à gaz latéral (30), il règne des pressions différentes dans les chambres individuelles (32, 34, 36).

9. Dispositif de protection des occupants d'un véhicule selon l'une des revendications précédentes, **caractérisé en ce qu'**une partie (54) du coussin à gaz latéral (30) est agencé, à l'état replié, dans un tube (21) qui s'étend dans la région du toit de véhicule (14).

10. Dispositif de protection des occupants d'un véhicule selon l'une des revendications précédentes, **caractérisé en ce qu'**une extrémité longitudinale (54) du coussin à gaz (30) replié s'étend le long du bord avant ou arrière du plafond du toit. (18).
